# EUROPÄISCHE PATENTSCHRIFT

(11) **EP 1 462 199 B1**
(45) Veröffentlichungstag und Bekanntmachung des Hinweises auf die Patenterteilung: **14.12.2011**
(21) Anmeldenummer: 04004800.1
(22) Anmeldetag: 02.03.2004
(51) Int. Cl.: B23C 5/20, B23B 27/14

(54) **Schneiplatte und Fräswerkzeug**
Cutting insert and milling tool
Plaquette de coupe et outil de fraisage

(30) Priorität: 22.03.2003 DE 10312922
(43) Veröffentlichungstag der Anmeldung: 29.09.2004
(73) Patentinhaber: WALTER AG, 72072 Tübingen (DE)
(72) Erfinder: Dürr, Hans-Peter, 72810 Gomaringen (DE); Stabel, Thorsten, 72116 Mössingen (DE)
(74) Vertreter: Rüger, Barthelt & Abel Patentanwälte

(56) Entgegenhaltungen:
- EP-A- 0 868 957
- US-A- 3 490 117

## Beschreibung

Die Erfindung betrifft eine Schneidplatte für Fräswerkzeuge, insbesondere Eckfräser sowie ein mit einer solchen Schneidplatte bestücktes Fräswerkzeug.

Fräswerkzeuge sind in der Regel mit Schneidplatten versehen, die sich in mehreren Einbaulagen an dem jeweiligen Plattensitz befestigen lassen. Es können dadurch mehrere Schneidkanten, die an der Schneidplatte vorgesehen sind, nacheinander zum Einsatz kommen, wodurch die Standzeit einer Schneidplatte verlängert wird. Die geometrische Form einer Schneidplatte beeinflusst dabei die Spanbildung wesentlich. Beispielsweise wird meist ein positiver Spanwinkel gewünscht und zwar sowohl an Umfangsschneiden sowie auch an etwaigen Stirnschneiden eines Fräswerkzeugs. Die Formgebung einer Schneidplatte trägt dem in der Regel Rechnung. So genannte Positivplatten weisen an ihren Schneidkanten Keilwinkel von deutlich weniger als 90° auf, was durch entsprechende Neigung der Seitenflächen (Freiflächen) und der Deckfläche (Spanfläche) erreicht wird.

Beispielsweise sind solche Schneidplatten aus der DE 36 18 574 A1 bekannt. Die Spanfläche einer solchen Schneidplatte, wie sie beispielsweise in den Figuren 42 sowie 55 und 56 veranschaulicht ist, weicht von der Form einer einfachen Ebene ab. Sie besteht aus zwei Teilflächen, die auf eine das Befestigungsloch durchsetzende Diagonale hin abfallen. Die Grundfläche dieser Schneidplatten ist eben. Entsprechend weist der Plattensitz des Werkzeugkörpers eine zugeordnete ebene Anlagefläche auf.

Die Wendeschneidplatten können bei diesem Stand der Technik in zwei unterschiedlichen Positionen an ihrem jeweiligen Plattensitz befestigt werden. Die Positionen unterscheiden sich durch eine Drehung um 180° um eine gedachte, koaxial durch das Befestigungsloch gehende Achse. Sind die in beiden Positionen zugänglichen Schneidkanten verschlossen, muss die Schneidplatte als Ganzes ausgetauscht werden.

Aus der US-A-3,490,117 ist eine Schneidplatte für einen Drehmeißel bekannt, deren in Draufsicht quadratischer Grundkörper eine Befestigungsbohrung aufweist. Der Grundkörper weist einen Drall um die Befestigungsbohrung herum auf. Seine Grundfläche und seine Deckfläche sind eben ausgebildet und dienen als Freiflächen. Die am Umfang ausgebildeten eine umlaufende Rinne definierenden Seitenflächen bilden Anlageflächen bzw. Spanflächen. Die Schneidplatte ist in Seitenansicht tailliert ausgebildet. Durch diese Formgebung wird ein positiver Spanwinkel erreicht.

Aus EP 0 799 664 A2 ist eine Schneidplatte bekannt, die eine ebene Grundfläche aufweist und deren Schneidkanten gegenüber der Grundfläche geneigt verlaufen. Die Seitenflächen zwischen der Deckfläche und der Grundfläche sind konvex gewölbt. Durch diese Wölbung reduziert sich der Freiwinkel zur Schneidkante hin, um dieser eine ausreichende Stabilität zu geben und die Standzeit der Schneidplatte zu erhöhen.

Eine gattungsgemäß Wendeschneidplatte mit abschnittsweise ebenen Seitenflächen geht aus US 5 807 031 hervor. Sie weist einen Grundkörper auf, der eine nicht ebene Grundfläche, eine nicht ebene Deckfläche und vier Seitenflächen aufweist, die mit der Grundfläche und mit der Deckfläche jeweils Schneidkanten festlegen, wobei die Grundfläche und die Deckfläche als Spanflächen nutzbar sind. Eine Befestigungsbohrung erstreckt sich von der Grundfläche zu der Deckfläche, die Grundfläche und die Deckfläche sind formgleich und wendesymmetrisch zueinander ausgebildet. Die Wendeschneidplatte weist eine komplex ausgestaltete Deckfläche bzw. Grundfläche auf, um die Spanabfuhr und die Schneidleistung zu verbessern. Hierfür grenzt an die Hauptschneidekante eine in zwei Richtungen geneigte Spanfläche an. Der Neigungswinkel rechtwinklig zur Schneidkante ist dabei größer als die Neigung parallel zur Schneidkante.

Davon ausgehend ist es Aufgabe der Erfindung, eine Schneidplatte sowie ein entsprechendes Fräswerkzeug zu schaffen, bei dem die Schneidplatte eine verbesserte Nutzungsdauer aufweist.

Diese Aufgabe wird mit der Schneidplatte nach Anspruch 1 sowie mit dem Fräswerkzeug nach Anspruch 15 gelöst.

Die erfindungsgemäße Schneidplatte weist einen Grundkörper auf, der in zwei Richtungen d.h. doppelt verwunden ist. Die entsprechende Schneidplatte hat somit keine ebene Grundfläche mehr, sondern eine Grundfläche, die mit der Deckfläche formgleich ist. Wird die Wendeschneidplatte beispielsweise um eine Längs- oder Querachse gewendet, so dass die Grundfläche an die Position kommt, die zuvor die Deckfläche eingenommen hat, stimmt die Deckfläche in allen wesentlichen Punkten mit der zuvor an dieser Stelle befindlichen Grundfläche überein und umgekehrt. Die Wendeschneidplatte ist somit drehsymmetrisch bzgl. wenigstens einer quer durch das Befestigungsloch gehenden Symmetrieachse ausgebildet. Die Wendeschneidplatte kann somit nicht nur am Platz um 180° um eine koaxial durch die Befestigungsöffnung gehende Achse gedreht werden (die ebenfalls eine Symmetrieachse ist), sondern zusätzlich um wenigstens eine quer zu dem Befestigungsloch orientierte Symmetrieachse. Dadurch werden nicht wie bislang lediglich zwei Schneidkanten bzw. Schneidkantenpaare zugänglich, sondern insgesamt vier, was die Einsatzdauer einer entsprechenden Schneidplatte gegenüber herkömmliche Schneidplatten verdoppelt.

Die Wendbarkeit von so genannten Wendeschneidplatten ist von einfachen Rechteckplatten mit quaderförmiger Grundform bekannt. Jedoch können solche einfachen Schneidplatten nicht ohne weiteres in Eckfräsern eingesetzt werden, insbesondere dann nicht, wenn positive Spanwinkel gefordert sind. Die vorgestellte Schneidplatte ermöglicht dies jedoch aufgrund ihrer doppelten Verwindung. Die beiden Symmetrieachsen liegen vorzugsweise in einer Mittelebene, auf der das Befestigungsloch im Wesentlichen senkrecht steht. Die Symmetrieachsen durchstoßen außerdem die Seitenflächen, die beispielsweise als Planflächen ausgebildet sein können. In diesem Fall schließen sie mit der Mittelebene jeweils einen rechten Winkel ein, so dass insgesamt eine Schneidplatte mit negativer Grundform geschaffen ist. Die negative Grundform ist pulvermetallurgisch relativ einfach herzustellen. Insbesondere sind keine Formen mit beweglichen Formteilen zum Herstellen des Pulverpresslings erforderlich. Die spezielle Verwindung der Grundfläche und der Deckfläche, die als Spanfläche dienen, ermöglicht an der Schneidplatte mit insgesamt negativer Grundform ohne weiteres sowohl die Erzielung positiver Spanwinkel. Dies in allen vier möglichen Einbaulagen. Positive Freiwinkel werden durch den entsprechend negativ geneigten Einbau der Schneidplatten in den Werkzeugkörper erreicht.

Während die Seitenflächen vorzugsweise eben ausgebildet sind, ist es auch möglich, diese facettiert oder auch konvex gewölbt auszubilden. Die doppelseitige Schneidplatte hat dann eine positive Spanflächengeometrie und ringsum negative Freiflächengeometrien. Außerdem können die schneidkanten, die als Umfangsschneidkanten dienen sollen, sowohl gerade als auch etwas bombiert, z.B. elliptisch gekrümmt ausgebildet sein. Die Krümmung ist dabei vorzugsweise so festgelegt, dass die Schneidkanten in Einbaulage eine Zylinderfläche festlegen. Ein solches Fräswerkzeug erzeugt mit seinen Umfangsschneiden ebene Flächen. Weitere Einzelheiten vorteilhafter Ausführungsformen der Erfindung ergeben sich aus der Zeichnung, der zugehörigen Beschreibung oder Unteransprüchen.

In der Zeichnung sind Ausführungsbeispiele der Erfindung veranschaulicht. Es zeigen:
- Fig. 1: ein erfindungsgemäßes Fräswerkzeuge, in einer per- spektivischen Seitenansicht,
- Fig. 2: das Fräswerkzeug nach Figur 1 in einer Stirnan- sicht,
- Fig. 3: eine Schneidplatte des Fräswerkzeuges nach Figur 1. oder 2 in einer perspektivischen Ansicht in einem anderen Maßstab,
- Fig. 4: die Schneidplatte nach Figur 3 in einer Seiten- ansicht,
- Fig. 5: die Schneidplatte nach Figur 3 in einer Stirn- ansicht,
- Fig. 6: die Schneidplatte nach Figur 3 in einer abgewan- delten Seitenansicht,
- Fig. 7: die Schneidplatte nach Figur 6 in Draufsicht,
- Fig. 8: eine abgewandelte Ausführungsform einer erfin- dungsgemäßen Schneidplatte in Stirnansicht,
- Fig. 9: die Schneidplatte nach Figur 8 in Seitenansicht und
- Fig. 10: eine Ausführungsform der erfindungsgemäßen Schneidplatte in Stirnansicht.

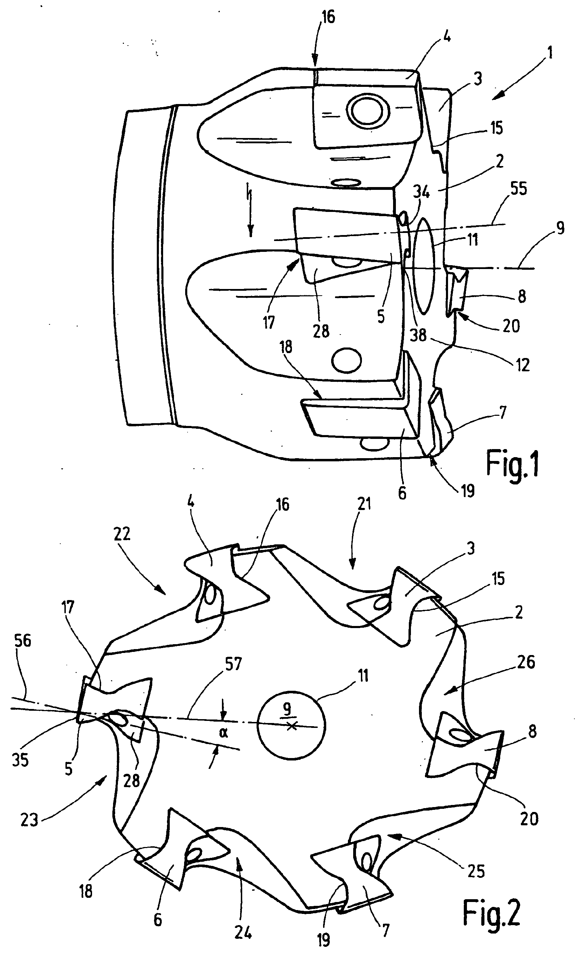

In Figur 1 ist ein Fräswerkzeug 1 veranschaulicht, das einen Werkzeugkörper 2 und an diesem befestigte Schneidplatten 3, 4, 5, 6, 7, 8 aufweist. Die Schneidplatten 3 bis 8 sind untereinander gleich ausgebildet. Die Beschreibung der Schneidplatte gilt deshalb entsprechend für alle anderen Schneidplatten 4 bis 8 des Fräswerkzeugs 1.

Der Werkzeugkörper 2 ist zur Drehung um eine Drehachse 9 vorgesehen und weist eine zu der Drehachse 9 konzentrische Befestigungsöffnung 11 auf. Das Fräswerkzeug 1 ist ein Eckfräser, dessen Schneidplatten 3 bis 8 aktive Schneidkanten sowohl an der Stirnseite 12 als auch umfangsseitig aufweisen. Die Schneidplatten 3 bis 8 sind an entsprechenden Plattensitzen 15 bis 20 angeordnet, die in entsprechenden Spanmulden 21 bis 26 des Werkzeugkörpers 2 angeordnet sind. Dies ist insbesondere aus Figur 2 ersichtlich.

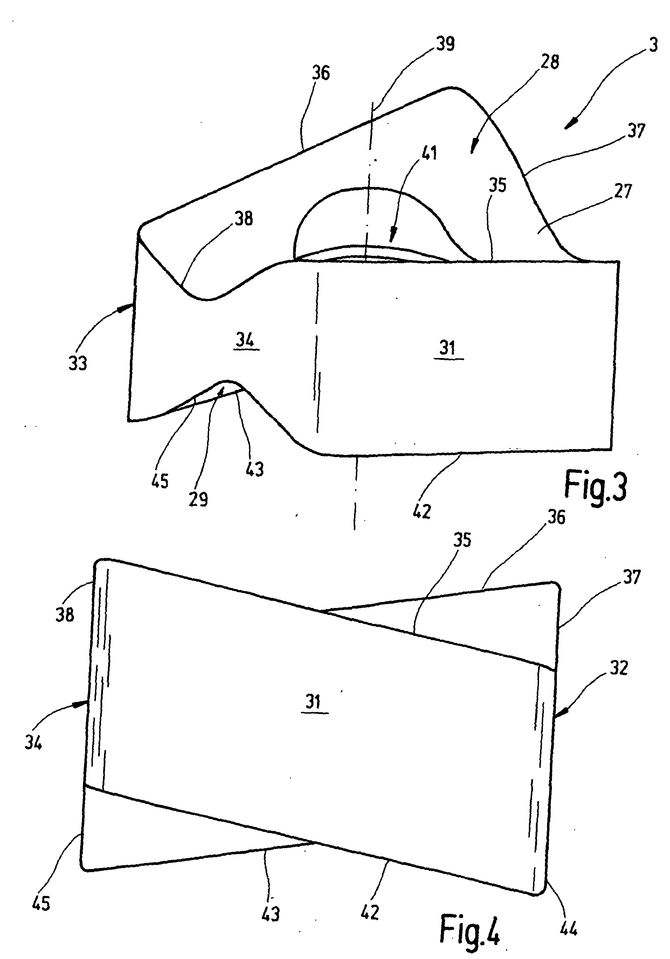

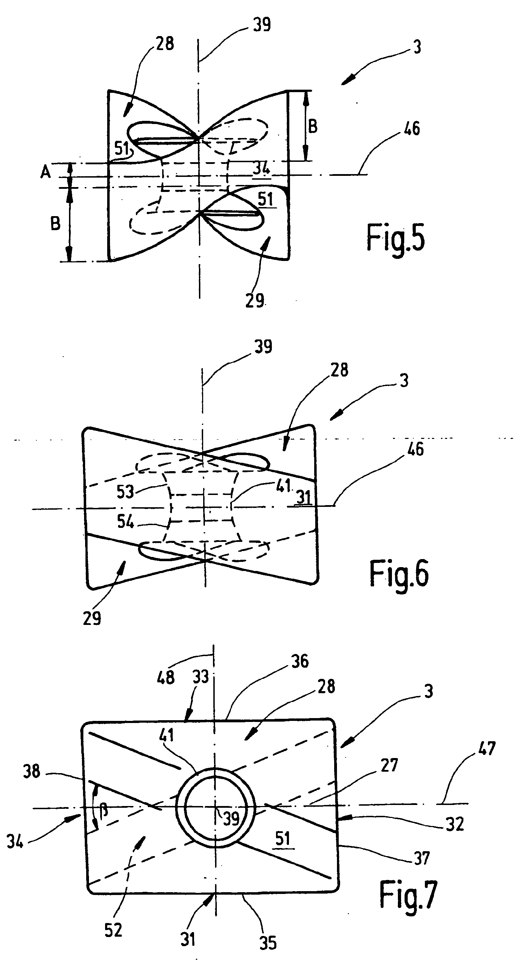

Die Schneidplatte 3 wird nachstehend anhand der Figuren 3 bis 7 erläutert. Die Schneidplatte 3 weist einen Grundkörper auf, der in Draufsicht, wie Figur 7 veranschaulicht, rechteckig oder auch rhombisch ausgebildet ist. Er wird nach oben hin von einer Deckfläche 28 und nach unten von einer Grundfläche 29 begrenzt. Die Grundfläche 29 und die Deckfläche 28 sind seitlich über Seitenflächen 31, 32, 33, 34 miteinander verbunden, die vorzugsweise eben ausgebildet sind. Sie schließen mit der Deckfläche 28 zwei Umfangsschneidkanten 35, 36 und zwei Stirnschneidkanten 37, 38 ein. Die Umfangsschneidkanten 35, 36 sind vorzugsweise gerade ausgebildet. Bedarfsweise können sie auch etwas gekrümmt sein. Sie dienen als Hauptschneidkanten. Die Stirnschneidkanten 37, 38 bilden hingegen Nebenschneidkanten. Die Umfangsschneidkante 36 und die Stirnschneidkanten 37 bilden ein erstes, die Umfangsschneidkante 35 und die Stirnschneidkante 38 bilden ein zweites Schneidkantenpaar. Der Deckfläche 28 sind somit zwei Schneidkantenpaare zugeordnet, die zwei Arbeitspositionen der Schneidplatte 3 entsprechen. Die Arbeitspositionen unterscheiden sich um eine Drehung der Schneidplatte um 180° um die aus Figur 3 ersichtliche Bohrungsachse 39, die konzentrisch durch eine mittig durch den Grundkörper 27 führende Befestigungsbohrung 41 festgelegt ist. Die Bohrungsachse 39 bildet somit eine Symmetrieachse für die Schneidplatte 3 hinsichtlich der Gestaltung der Deckfläche 28 und der Seitenflächen 31, 32, 33, 34. Entsprechend ist die Schneidplatte auch mit Blick auf die Grundfläche 29 symmetrisch ausgebildet. Die Grundfläche 29 wird von Schneidkanten 42, 43, 44, 45 umgrenzt, die sie mit den Seitenflächen 31, 32, 33, 34 festlegt. Die Schneidkanten 42, 43 sind Umfangsschneidkanten, während die Schneidkanten 44, 45 Stirnschneidkanten sind.

Die Schneidkanten 35 bis 38 und 42 bis 45 sind jeweils schräg zu einer Mittelebene 46 angeordnet, auf der die Bohrungsachse 39 im Wesentlichen senkrecht steht. Die Mittelebene 46 ist in den Figuren 5 und 6 veranschaulicht. Sie steht jeweils senkrecht auf der Zeichenebene. Die Mittelebene 46 geht außerdem durch den Schwerpunkt des Grundkörpers 27. Sie legt zugleich zwei weitere Symmetrieachsen fest, die senkrecht zu der Bohrungsachse 39 orientiert sind. Eine erste Symmetrieachse 47 ist parallel zu den Seitenflächen 31, 33 orientiert, die ihrerseits flächenparallel zueinander sind. Eine zweite Symmetrieachse 48 ist parallel zu den Seitenflächen 32, 34 orientiert, die parallel zueinander angeordnet sind. Dies gilt sowohl im Falle rechteckiger Draufsicht (Figur 7) als auch im Falle von Schneidplatten mit rhombischer Grundform. Im erstgenannten Fall sind die Symmetrieachsen 47, 48 rechtwinklig zueinander orientiert, während sie im zweitgenannten Fall in einem mehr oder weniger spitzen Winkel zueinander stehen, dessen Größe mit der Größe des spitzen Eckenwinkels übereinstimmt.

Die Symmetrieachsen 47, 48 sind Wendeachsen, um die die Schneidplatte 3 gedreht werden kann. Der Grundkörper 27 ist sowohl um die Symmetrieachse 47 als auch die Symmetrieachse 48 verwunden. Entsprechend fällt die Deckfläche 28 von der hohen Ecke, die zwischen der Stirnschneidkante 37 und der Umfangsschneidkante 36 definiert ist, zu der Befestigungsbohrung 41 hin ab. Die Deckfläche 28 fällt außerdem von der anderen hohen Ecke, die zwischen der Umfangsschneidkante 35 und der Stirnschneidkante 38 festgelegt ist, zu der Befestigungsbohrung 41 hin ab. Die Deckfläche 28 weist somit eine diagonal verlaufende Rinne oder Vertiefung 51 auf. Die auf der Grundfläche angeordnete entsprechende Vertiefung 52 verläuft dagegen in Richtung der anderen Diagonalen der in Draufsicht viereckigen Grundform.

Die Befestigungsbohrung 41 weist an ihren beiden einander gegenüberliegenden Mündungen konische Anlagenflächen 53, 54 auf, die zu der Bohrungsachse 39 konzentrisch angeordnet sind. Die Plattensitze 15 bis 20 sind jeweils im Anschluss an einen Spanraum 21 bis 26 mit zwei planen Anlageflächen für die Seitenflächen jeder Schneidplatte 3 bis 8 sowie mit einer Auflagefläche versehen, deren Form der Grundfläche 29 und somit auch der Deckfläche 28 entspricht. Die Plattensitze sind dabei untereinander gleich ausgebildet. Sie stellen die Schneidplatten 3 bis 8 bezüglich der Radialrichtung negativ und bezüglich der Axialrichtung negativ ein. Figur 1 veranschaulicht die Stellung der Mittelebene 46 in Bezug auf die Drehachse 9. Eine in Figur 1 eingetragene Linie 55 steht senkrecht auf der stirnseitigen Seitenfläche 34 der Schneidplatte 5 und markiert somit die Neigung der nicht weiter veranschaulichten Mittelebene 46. Wie ersichtlich schließt die Linie 55 mit der Linie 9 in der Projektion in die gemeinsame Zeichenebene einen spitzen Winkel ein, womit die Seitenfläche 34 einen positiven Freiwinkel festlegt. Aufgrund der starken Verwindung des Grundkörpers 47 fällt die von der stirnseitigen Schneidkante 38 weg laufende Deckfläche 28 jedoch so stark ab, dass an der Stirnseite ein positiver Achswinkel (Spanwinkel) trotz negativer Einstellung der Schneidplatte 5 entsteht.

Gleiches gilt für die anderen Schneidplatten. Hinsichtlich der radialen Einstellung wird auf Figur 2 verwiesen. Eine Linie 56, die parallel zu der Mittelebene 46 angeordnet ist und die nacheilende Ecke der Umfangsschneidkante 35 der Schneidplatte 5 trifft, schließt mit der radialen Richtung 57 einen spitzen Winkel α ein, der hier als negativer Winkel angesehen wird. Dies ergibt einen positiven Freiwinkel. Ein positiver Spanwinkel wird durch den starken Abfall der Deckfläche 28 von der Umfangsschneidkante 35 weg erhalten. Unter starkem Abfall wird hier verstanden, dass die Deckfläche 28 an der Schneidkante 35 mit der Seitenfläche 31 einen Winkel einschließt, der deutlich geringer als 90° ist. Mit anderen worten, die erfindungsgemäße Schneidplatte 3 weist Seitenflächen 31, 32, 33, 34 auf, die senkrecht zu der Mittelebene 46 orientiert sind und die an allen Schneidkanten 35, 36, 37, 38 bzw. 42, 43, 44, 45 einen Keilwinkel kleiner 90° aufweisen. Außerdem fallen die Spanflächen d.h. die Deckfläche 28, sowie die Grundfläche 29 jeweils auf eine Diagonale hin ab, wobei die Diagonalen gemäß Figur 7 voneinander verschieden sind.

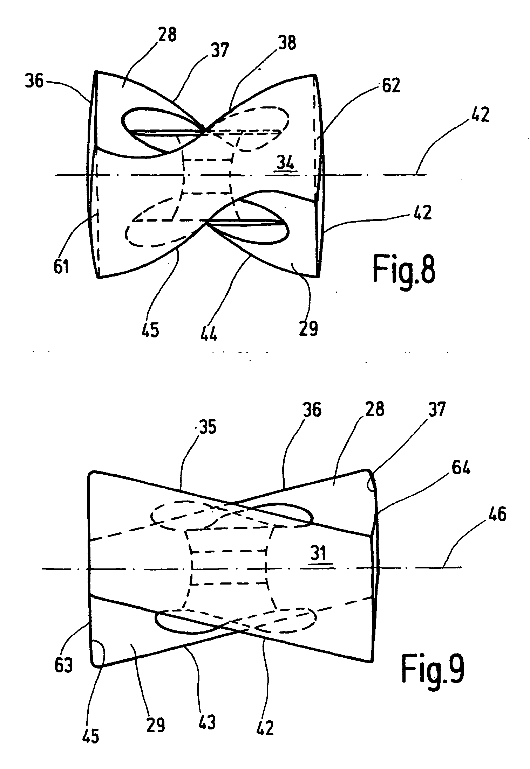

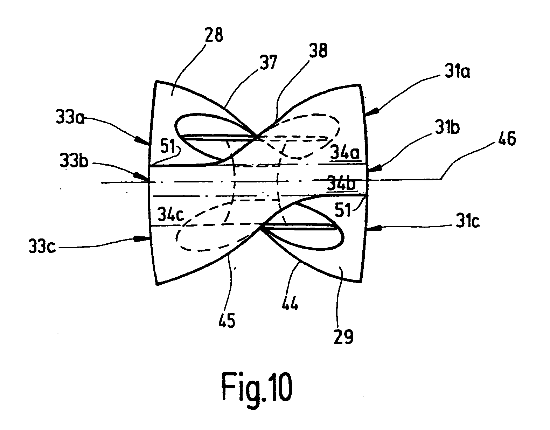

Die Figuren 8 und 9 veranschaulichen eine abgewandelte Ausführungsform der Schneidplatte 3, die sich von den vorbeschriebenen Schneidplatten lediglich dadurch unterscheidet, dass die Seitenflächen 31, 32, 33, 34 konvex gewölbt ausgebildet sind. Die Seitenflächen wölben sich jeweils über eine Linie 61, 62, 63, 64, die an eine gleiche Seitenfläche 31, 32, 33, 34 anschließende Schneidkanten miteinander verbindet. Die Linien 61 bis 64 sind jedoch wiederum rechtwinklig zu der Mittelebene 46 orientiert. Ansonsten gilt die vorige Beschreibung entsprechend. Anstelle von konvex gewölbten Seitenflächen können diese auch konvex facettiert sein wie Figur 10 zeigt. Dies gilt für alle vier Seitenflächen der Schneidplatte 3. Die Seitenflächenfacetten sind in Figur 10 mit Buchstabenindice a, b, c versehen. Die mit "b" indizierten Facetten stehen rechtwinklig zu der Mittelebene 46 und umgrenzen einen quaderförmigen Mittelbereich. Dessen Dicke A ist geringer, vorzugsweise deutlich geringer als die Höhe der Erhebung B, mit der die oberen und unteren Ecken jeweils über den Mittelbereich A überstehen (siehe S. 5). Dies ist Ausdruck der dramatischen "Verwindung" der Schneidplatte 3. Der Mittelbereich wird nach oben und unten durch die Rinnen oder Vertiefungen 51 begrenzt, die in zueinander parallelen Ebenen liegen. Eine entsprechende Geometrie weisen auch die Schneidplatten 3 nach Figur 5 bis 9 auf.

Eine Schneidplatte 3, die insbesondere für einen Eckfräser (Fräswerkzeug 1) vorgesehen ist, weist einen in Draufsicht viereckigen z.B. rechteckigen oder rhombischen Grundkörper auf, dessen vorzugsweise ebenen Seitenflächen 31 bis 34 parallel zu einer Bohrungsachse 39 seiner Befestigungsbohrung 41 und/oder rechtwinklig zu einer durch den Schwerpunkt des Grundkörpers 27 gehenden Mittelebene 46 orientiert sind. Die Grundfläche 29 und die Deckfläche 28 sind formgleich und wendesymmetrisch zueinander ausgebildet. Sie fallen dabei jeweils zu einer schräg über die Grundfläche 29 bzw. die Deckfläche 28 laufenden Rinne ab. Die Rinnen kreuzen einander mit spitzem Winkel β. Die paarweise an die gleiche Seitenfläche 31 bzw. 33 grenzenden Umfangsschneidkanten 35, 42, 36, 43 sind vorzugsweise gerade und parallel zueinander angeordnet. Es wird eine Wendeschneidplatte erhalten, die in 4 unterschiedlichen Einbaulagen Verwendung finden kann und somit vier verschiedenen Schneidkanten oder Schneidkantenpaare aufweist. Die Schneidplatte 3 weist eine insgesamt negative Grundform auf, wobei sie in allen Einbaulagen die Erzielung eines positiven Axialspanwinkels und eines positiven Radialspanwinkels gestattet.

## Patentansprüche

1. Schneidplatte (3) für Fräswerkzeuge (1), insbesondere Eckfräser,
mit einem Grundkörper (27), der eine nicht ebene Grundfläche (29), eine nicht ebene Deckfläche (28) und vier Seitenflächen (31, 32, 33, 34) aufweist, die mit der Grundfläche (29) und mit der Deckfläche (28) jeweils Schneidkanten (35, 36, 37, 38, 42, 43, 44, 45) festlegen, wobei die Grundfläche (29) und die Deckfläche (28) als Spanflächen nutzbar sind,
mit einer Befestigungsbohrung (41), die sich von der Grundfläche (29) zu der Deckfläche (28) erstreckt,
wobei der Grundkörper um zwei Symmetrieachsen (47, 48) verwunden ist, die in einer gemeinsamen Ebene (46) liegen, die von der Befestigungsbohrung (41) unter einem rechten Winkel geschnitten ist, und wobei
die Grundfläche (29) und die Deckfläche formgleich und wendesymmetrisch zueinander ausgebildet sind.

2. Schneidplatte nach Anspruch 1, **dadurch gekennzeichnet, dass** die gemeinsame Ebene (46) eine Mittelebene ist.

3. Schneidplatte nach Anspruch 1, **dadurch gekennzeichnet, dass** die beiden Achsen (47, 48) einander unter einem Rechten Winkel schneiden.

4. Schneidplatte nach Anspruch 1, **dadurch gekennzeichnet, dass** die Schneidkanten (35, 36, 37, 38, 42, 43, 44, 45) bezüglich der beiden Richtungen (47, 48) symmetrisch angeordnet sind, die **dadurch** Symmetrieachsen festlegen.

5. Schneidplatte nach Anspruch 1, **dadurch gekennzeichnet, dass** die Schneidplatte (3) doppelt liniensymmetrisch ausgebildet ist.

6. Schneidplatte nach Anspruch 1, **dadurch gekennzeichnet, dass** jeweils zwei an die gleiche Seitenfläche (31, 32, 33, 34) grenzende Schneidkanten (35, 42; 37, 44; 36, 43; 38, 45), von denen eine an die Deckfläche (28) und die andere an die Grundfläche (29) anschließt, eine Linie (61, 62, 63, 64) festlegen, die die Mittelebene (46) rechtwinklig schneidet.

7. Schneidplatte nach Anspruch 1, **dadurch gekennzeichnet, dass** die Seitenflächen (31, 32, 33, 34) konvex ausgebildet sind.

8. Schneidplatte nach Anspruch 1, **dadurch gekennzeichnet, dass** die Schneidplatte (3) einen Mittelabschnitt aufweist, dessen Dicke A geringer ist als die Eckenhöhe B.

9. Schneidplatte nach Anspruch 1, **dadurch gekennzeichnet, dass** die Seitenflächen (31, 32, 33, 34) rechtwinklig zu der Mittelebene (46) angeordnet sind.

10. Schneidplatte nach Anspruch 1, **dadurch gekennzeichnet, dass** die Seitenflächen (31, 32, 33, 34) ebene Flächen sind.

11. Schneidplatte nach Anspruch 1, **dadurch gekennzeichnet, dass** die Befestigungsbohrung (41) an der Deckfläche (28) und an der Grundfläche (29) jeweils eine Anlagefläche (53, 54) für den Kopf einer Befestigungsschraube aufweist.

12. Schneidplatte nach Anspruch 11, **dadurch gekennzeichnet, dass** die Anlageflächen (53, 54) Konusflächen sind.

13. Schneidplatte nach Anspruch 1, **dadurch gekennzeichnet, dass** die Deckfläche (28) und die Grundfläche (29) in Draufsicht jeweils rechteckig ausgebildet sind.

14. Schneidplatte nach Anspruch 1, **dadurch gekennzeichnet, dass** wenigstens zwei Seitenflächen (31, 33) rhombisch ausgebildet sind.

15. Fräswerkzeug mit einer Schneidplatte nach einem der vorhergehenden Ansprüche und mit einem Werkzeugkörper (2), der eine Drehachse (9) festlegt und Plattensitze (15, 16, 17, 18, 19, 20) für die Schneidplatten (3, 4, 5, 6, 7, 8) aufweist.

16. Fräswerkzeug nach Anspruch 15, **dadurch gekennzeichnet, dass** die Plattensitze (15, 16, 17, 18, 19, 20) Anlageflächen aufweisen, an denen die Schneidplatte (3, 4, 5, 6, 7, 8) bezüglich einer zu der Mittelebene (46) parallelen Linie (56), die die Umfangsschneidkante (35) an ihrer nacheilenden Ecke berührt, in Radialrichtung negativ eingestellt ist.

17. Fräswerkzeug nach Anspruch 15, **dadurch gekennzeichnet, dass** die Plattensitze (15, 16, 17, 18, 19, 20) Anlageflächen aufweisen, an denen die Schneidplatte (3, 4, 5, 6, 7, 8) bezüglich einer zu der Mittelebene (46) parallelen Linie (55) in Axialrichtung negativ eingestellt ist.

## Claims

1. Cutting tip (3) for milling cutters (1), in particular angle cutters,
with a base body (27), which has a non-level bottom face (29), a non-level top face (28) and four side faces (31, 32, 33, 34), which respectively define cutting edges (35, 36, 37, 38, 42, 43, 44, 45) with the bottom face (29) and with the top face (28), wherein the bottom face (29) and the top face (28) are usable as rake faces,
with a mounting hole (41), which extends from the bottom face (29) to the top face (28),
wherein the base body is twisted around two axes of symmetry (47, 48) lying in a common plane (46), which is intersected by the mounting hole (41) at a right angle, and wherein
the bottom face (29) and the top face are identical in shape and configured rotationally symmetrically to one another.

2. Cutting tip according to claim 1, **characterised in that** the common plane (46) is a centre plane.

3. Cutting tip according to claim 1, **characterised in that** the two axes (47, 48) intersect one another at a right angle.

4. Cutting tip according to claim 1, **characterised in that** the cutting edges (35, 36, 37, 38, 42, 43, 44, 45) are arranged symmetrically with respect to the two directions (47, 48), which thus define axes of symmetry.

5. Cutting tip according to claim 1, **characterised in that** the cutting tip (3) is configured with double linear symmetry.

6. Cutting tip according to claim 1, **characterised in that** two cutting edges (35, 42; 37, 44; 36, 43; 38, 45) adjoining the same side face (31, 32, 33, 34), one of which cutting edges connecting to the top face (28) and the other to the bottom face (29), respectively define a line (61, 62, 63, 64), which intersects the centre plane (46) at right angles.

7. Cutting tip according to claim 1, **characterised in that** the side faces (31, 32, 33, 34) are convex.

8. Cutting tip according to claim 1, **characterised in that** the cutting tip (3) has a central section, the thickness A of which is smaller than the corner height B.

9. Cutting tip according to claim 1, **characterised in that** the side faces (31, 32, 33, 34) are arranged at right angles to the centre plane (46).

10. Cutting tip according to claim 1, **characterised in that** the side faces (31, 32, 33, 34) are plane faces.

11. Cutting tip according to claim 1, **characterised in that** the mounting hole (41) has a respective abutment surface (53, 54) for the head of a fastening screw on the top face (28) and on the bottom face (29).

12. Cutting tip according to claim 11, **characterised in that** the abutment faces (53, 54) are conical faces.

13. Cutting tip according to claim 1, **characterised in that** the top face (28) and the bottom face (29) are respectively rectangular in plan view.

14. Cutting tip according to claim 1, **characterised in that** at least two side faces (31, 33) are rhombic.

15. Milling cutter with a cutting tip according to one of the preceding claims and with a tool body (2), which defines a rotational axis (9) and has tip seatings (15, 16, 17, 18, 19, 20) for the cutting tips (3, 4, 5, 6, 7, 8).

16. Milling cutter according to claim 15, **characterised in that** the tip seatings (15, 16, 17, 18, 19, 20) have abutment faces, at which the cutting tip (3, 4, 5, 6, 7, 8) is negatively adjusted in radial direction relative to a line (56), which is parallel to the centre plane (46) and touches the peripheral cutting edge (35) at its trailing corner.

17. Milling cutter according to claim 15, **characterised in that** the tip seatings (15, 16, 17, 18, 19, 20) have abutment faces, at which the cutting tip (3, 4, 5, 6, 7, 8) is negatively adjusted in axial direction relative to a line (55) parallel to the centre plane (46).

## Revendications

1. Plaquette de coupe (3) destinée à des outils de fraisage (1), en particulier des fraises d'angle,
comprenant un corps de base (27) qui présente une face de base (29) non plane, une face de couverture (28) non plane et quatre faces latérales (31, 32, 33, 34) qui définissent avec la face de base (29) et la face de couverture (28) respectivement des arêtes de coupe (35, 36, 37, 38, 42, 43, 44, 45), la face de base (29) et la face de couverture (28) pouvant être utilisées comme faces de coupe,
comprenant un trou de fixation (41) qui s'étend de la face de base (29) à la face de couverture (28),
le corps de base étant vrillé autour de deux axes de symétrie (47, 48) qui se situent dans un même plan (46), lequel est coupé à angle droit par le trou de fixation (41), et
la face de base (29) et la face de couverture étant réalisées avec des formes identiques et une symétrie inverse l'une par rapport à l'autre.

2. Plaquette de coupe selon la revendication 1, **caractérisée en ce que** le plan commun (46) est un plan médian.

3. Plaquette de coupe selon la revendication 1, **caractérisée en ce que** les deux axes (47, 48) se coupent l'un l'autre à angle droit.

4. Plaquette de coupe selon la revendication 1, **caractérisée en ce que** les arêtes de coupe (35, 36, 37, 38, 42, 43, 44, 45) sont disposées de façon symétrique par rapport aux deux directions (47, 48) qui définissent de ce fait des axes de symétrie.

5. Plaquette de coupe selon la revendication 1, **caractérisée en ce que** la plaquette de coupe (3) est réalisée avec une double symétrie linéaire.

6. Plaquette de coupe selon la revendication 1, **caractérisée en ce que** chaque fois deux arêtes de coupe (35, 42; 37, 44; 36, 43; 38, 45), qui sont contiguës à la même face latérale (31, 32, 33, 34) et dont l'une se raccorde à la face de couverture (28) et l'autre à la face de base (29), définissent une ligne (61, 62, 63, 64) qui coupe le plan médian (46) en formant un angle droit.

7. Plaquette de coupe selon la revendication 1, **caractérisée en ce que** les faces latérales (31, 32, 33, 34) sont réalisées sous une forme convexe.

8. Plaquette de coupe selon la revendication 1, **caractérisée en ce que** la plaquette de coupe (3) présente une partie centrale dont l'épaisseur A est inférieure à la hauteur aux angles B.

9. Plaquette de coupe selon la revendication 1, **caractérisée en ce que** les faces latérales (31, 32, 33, 34) sont disposées à angle droit par rapport au plan médian (46).

10. Plaquette de coupe selon la revendication 1, **caractérisée en ce que** les faces latérales (31, 32, 33, 34) sont des surfaces planes.

11. Plaquette de coupe selon la revendication 1, **caractérisée en ce que** le trou de fixation (41) présente, sur la face de couverture (28) et sur la face de base (29), respectivement une surface d'appui (53, 54) pour la tête d'une vis de fixation.

12. Plaquette de coupe selon la revendication 11, **caractérisée en ce que** les surfaces d'appui (53, 54) sont des surfaces coniques.

13. Plaquette de coupe selon la revendication 1, **caractérisée en ce qu'**en vue de dessus, la face de couverture (28) et la face de base (29) sont réalisées chacune avec une forme rectangulaire.

14. Plaquette de coupe selon la revendication 1, **caractérisée en ce qu'**au moins deux faces latérales (31, 33) sont réalisées en forme de rhomboïde.

15. Outil de fraisage doté d'une plaquette de coupe selon une des revendications précédentes et d'un corps d'outil (2) qui définit un axe de rotation (9) et présente des logements de plaquette (15, 16, 17, 18, 19, 20) pour les plaquettes de coupe (3, 4, 5, 6, 7, 8).

16. Outil de fraisage selon la revendication 15, **caractérisé en ce que** les logements de plaquette (15, 16, 17, 18, 19, 20) présentent des surfaces d'appui sur lesquelles la plaquette de coupe (3, 4, 5, 6, 7, 8) est réglée de manière négative dans la direction radiale, par rapport à une ligne (56) qui est parallèle au plan médian (46) et touche l'arête de coupe périphérique (35) à son angle arrière.

17. Outil de fraisage selon la revendication 15, **caractérisé en ce que** les logements de plaquette (15, 16, 17, 18, 19, 20) présentent des surfaces d'appui sur lesquelles la plaquette de coupe (3, 4, 5, 6, 7, 8) est réglée de manière négative dans la direction axiale, par rapport à une ligne (55) qui est parallèle au plan médian (46).
